# EUROPEAN PATENT SPECIFICATION

(11) **EP 3 919 955 B1**
(45) Date of publication and mention of the grant of the patent: **15.05.2024**
(21) Application number: 21177672.9
(22) Date of filing: 04.06.2021
(51) Int. Cl.: G02B 6/44

(54) **CABLE MANAGER PART FOR TELECOMMUNICATIONS TRAY ASSEMBLY**
KABELMANAGERTEIL FÜR TELEKOMMUNIKATIONSPLATTENANORDNUNG
PIÈCE GESTIONNAIRE DE CÂBLES POUR ENSEMBLE PLATEAU DE TÉLÉCOMMUNICATIONS

(30) Priority: 04.06.2020 US 202063034574 P
(43) Date of publication of application: 08.12.2021
(73) Proprietor: CommScope Connectivity Belgium BV, 3010 Kessel-Lo (BE)
(72) Inventor: CLAES, Peter, Hickory, 28602 (US); KEUSTERMANS, Eric Marcel M., Hickory, 28602 (US)
(74) Representative: Murgitroyd & Company

(56) References cited:
- WO-A2-2014/147059
- WO-A2-2016/042018
- US-A1- 2007 230 889
- US-A1- 2014 248 028
- US-A1- 2019 137 717

## Description

### CROSS-REFERENCE TO RELATED APPLICATION

This application claims the benefit of U.S. Patent Application Serial No. 63/034,574, filed on June 4, 2020.

### FIELD OF THE INVENTION

The present invention relates to telecommunications panels and cable bend control guides, patch cord supports, and hinges adapted to be used in various telecommunications panels.

### BACKGROUND

Numerous telecommunications panels exist today and are used in various equipment applications. Conventional telecommunications panels include hinges that are designed to allow a tray to be rotated out of the telecommunications panel. By rotating the tray out of the telecommunications panel, access is provided to rear portions of a termination field. Such trays may include cable management structures that aid in organizing and managing telecommunications cables routed to and away from the telecommunications panel.
WO 2016/042018 A2 discloses a cable manager part suitable for a snap-fit rotatable connection to a telecommunications tray comprising a pair of receiving structures having open channels.
WO 2014/147059 A2, US 2007/230889 A1, US 2019/137717 A1 and US 2014/248028 A1 disclose cable management parts which have rotatable connections to telecommunication trays.

### SUMMARY

The invention concerns a cable manager part according to claim 1.

The invention also concerns a telecommunication tray assembly according to claim 6.

### BRIEF DESCRIPTION OF THE DRAWINGS

The accompanying drawings, which are incorporated in and constitute a part of the description, illustrate several aspects of the present disclosure. A brief description of the drawings is as follows:
Figure 1 is a perspective view of an example telecommunications tray assembly having a cable manager part in accordance with principles of the present disclosure.
Figure 2 is a partial view of the telecommunications tray assembly shown in Figure 1, as indicated at Figure 1.
Figure 3 is a partial top view of the telecommunications tray assembly shown in Figure 1.
Figure 4 is a partial front view of the telecommunications tray assembly shown in Figure 1.
Figure 5 is a partial top view of the telecommunications tray assembly shown in Figure 1, with the cable manager part removed from the tray assembly.
Figure 6 is a partial front view of the telecommunications tray assembly shown in Figure 1, with the cable manager part removed from the tray assembly.
Figure 7 is a perspective view of the cable manager part of the telecommunications tray assembly shown in Figure 1.
Figure 8 is a front view of the cable manager part shown in Figure 7.
Figure 9 is a rear view of the cable manager part shown in Figure 7.
Figure 10 is a first end view of the cable manager part shown in Figure 7.
Figure 11 is a second end view of the cable manager part shown in Figure 7.
Figure 12 is a top view of the cable manager part shown in Figure 7.
Figure 13 is a bottom view of the cable manager part shown in Figure 7.
Figure 14 is a close-up enlarged portion of the cable manager part shown in Figure 12.
Figure 15 is a close-up enlarged portion of the cable manager part shown in Figure 13.
Figure 16 is a perspective view of the cable manager part shown in Figure 7 shown in an initial installation or a final removal position with respect to the telecommunications tray assembly.
Figure 17 is a perspective view of the cable manager part shown in Figure 16 shown in an intermediate installation or a removal position with respect to the telecommunications tray assembly.
Figure 18 is a perspective view of the cable manager part shown in Figure 16 shown in a fully installed position with respect to the telecommunications tray assembly, wherein the cable manager part is rotated in an open position.
Figure 19 is a perspective view of the cable manager part shown in Figure 16, wherein the cable manager part is rotated into a first intermediate second position.
Figure 20 is a perspective view of the cable manager part shown in Figure 16, wherein the cable manager part is rotated into a second intermediate second position.
Figure 21 is a perspective view of the cable manager part shown in Figure 16, wherein the cable manager part is rotated into closed position.
Figure 22 is a perspective view of an example telecommunications tray assembly having a cable manager part in accordance with principles of the present disclosure.
Figure 23 is a partial view of the telecommunications tray assembly shown in Figure 22, as indicated at Figure 22.
Figure 24 is a partial perspective view of the telecommunications tray assembly shown in Figure 22, with the cable manager part removed from the tray assembly
Figure 25 is a partial top view of the telecommunications tray assembly shown in Figure 22, with the cable manager part removed from the tray assembly.
Figure 26 is a partial front view of the telecommunications tray assembly shown in Figure 22, with the cable manager part removed from the tray assembly

### DETAILED DESCRIPTION

Reference will now be made in detail to exemplary aspects of the present disclosure that are illustrated in the accompanying drawings. Whenever possible, the same reference numbers will be used throughout the drawings to refer to the same or similar parts.

### Telecommunications Tray Assembly 10 - General

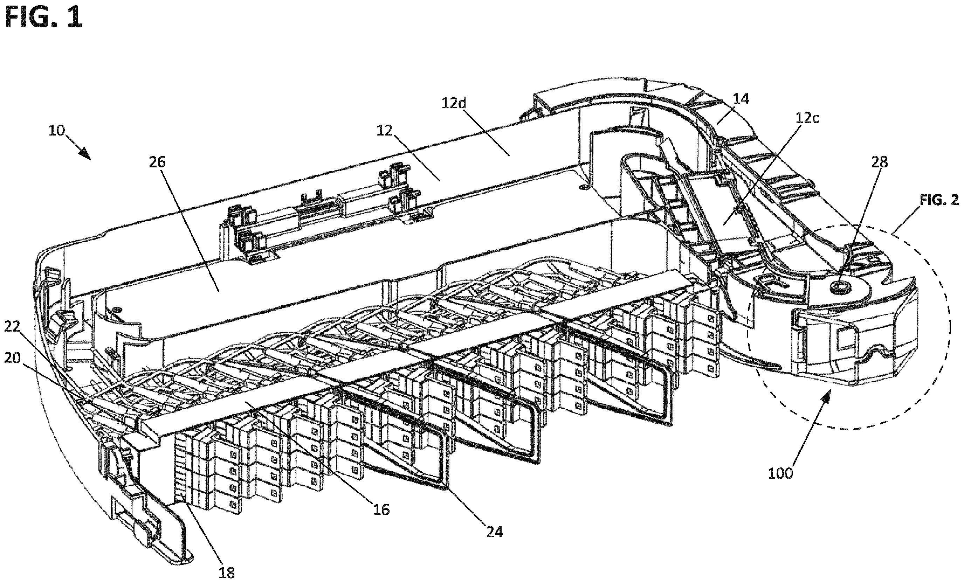

Referring now to Figure 1, a telecommunications tray assembly 10 for installation in a panel or chassis (e.g., an enclosure, an optical distribution frame, etc.) is illustrated according to the principles of the present disclosure. The telecommunications tray assembly 10 may be used for various purposes in telecommunications systems. For example, the telecommunications tray assembly 10 can be provided with a main body configured to house a cable management structure including, for example, stacked splice trays 26 and a patch panel 16. In one aspect, patch cords 22 (i.e., patch cables, connectorized fiber optic cables, etc.) may enter the telecommunications tray assembly 10 and be interconnected at the patch panel 16. The patch panel 16 may include a plurality of fiber optic adapters 18. Fiber optic connectors 20 that terminate ends of the patch cords 22 may connect with the fiber optic adapters 18 of the patch panel 16. Additional connectors can be connected to the opposite ends of the fiber optic adapters 18. Cable manager parts 24 can also be provided proximate the patch panel 16 to organize patch cords attached to the front side of the fiber optic adapters 18. The interconnections at the patch panel 16 may be rearranged from time-to-time, as desired, for changing configurations of the telecommunications system. The telecommunications tray assembly 10 may further hold splitters, filters, and various other telecommunications components. An exemplary telecommunications tray assembly 10, with related features, is shown and described in United States Patent 10,502,917, issued on December 10, 2019.

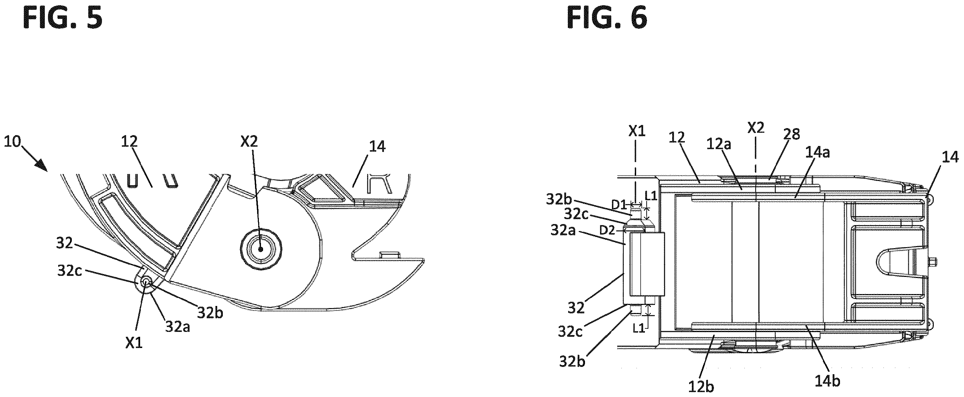

In one aspect, the tray assembly 10 includes a tray 12 (e.g., a sub-rack) and a support arm 14 that are pivotally connected to each other via a pivot joint 28 that allows the tray assembly 10 to be moved between a folded position and an access position with respect to the support arm 14. As most easily viewed at Figure 6, the pivot joint 28 is formed by the interface between an upper joint arm 14a of the support arm 14 and an upper joint extension 12a of the tray 12 and by the interface between a lower joint arm 14b of the support arm 14 and a lower joint extension 12b of the tray 12. In the particular example shown, the upper and lower joint extensions 12a, 12b are formed on an intermediate structure 12c connected to a main body 12d of the tray 12. The interfaces can be secured together by a variety of means, for example, a snap-fit type connection via protrusions and corresponding recesses or by a connection utilizing fasteners. As depicted, the pivot joint 28 represents the connection between the tray 12 and the support arm 14 and defines a vertical hinge with an axis X2 for the tray assembly 10 such that the tray 12 is multi-positionable between storage and access positions.

### Cable Manager Part 100

In one aspect, the telecommunications tray assembly 10 can be provided with a cable manager part 100. As shown, the tray 12 is provided with a mounting structure 32 to which a cable manager part 100 is rotatably attached. The mounting structure 32 is shown as being formed as a portion of the intermediate structure 12c but could also be formed on a different portion of the tray 12 or on the support arm 14, in some implementations. In one aspect, the cable manager part 100 is rotatable such that the pivot joint 28 and axis X2 are covered by the cable manager part 100 in one position and such that the pivot joint 28 and axis X2 are uncovered by the cable manager part 100 in another position.

As most easily viewed at Figures 5 and 6, the mounting structure 32 is provided with a main body 32a from which a pair of pins 32b vertically extend in opposite directions. In one aspect, the main body 32a and pins 32b are coaxially aligned along an axis X1. In one aspect the pins 32b have a diameter or dimension D1 that is less than a diameter or dimension D2 of the main body 32a such that a shoulder 32c is formed between the main body 32a and the pins 32b. In one aspect, the pins 32b have a free end and extend a length L1 from the main body 32a.

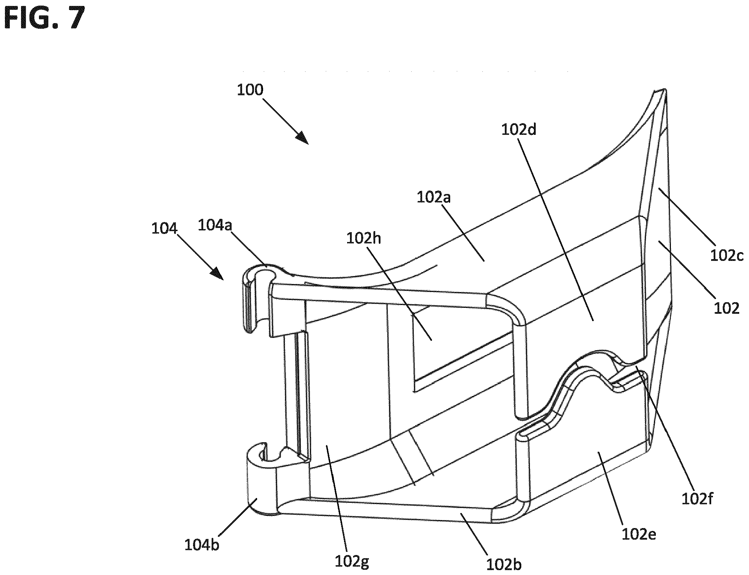

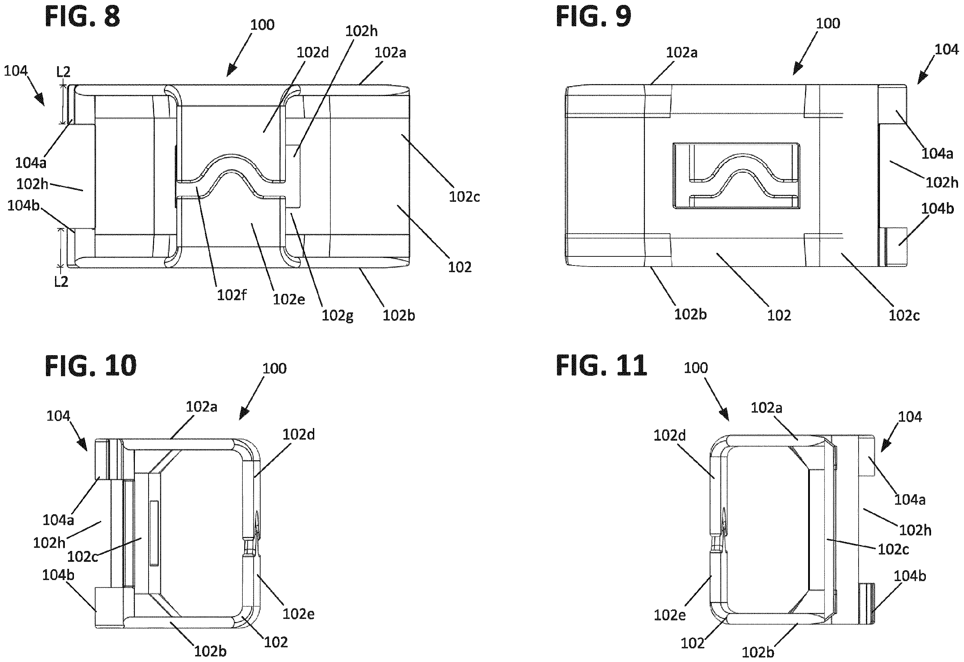

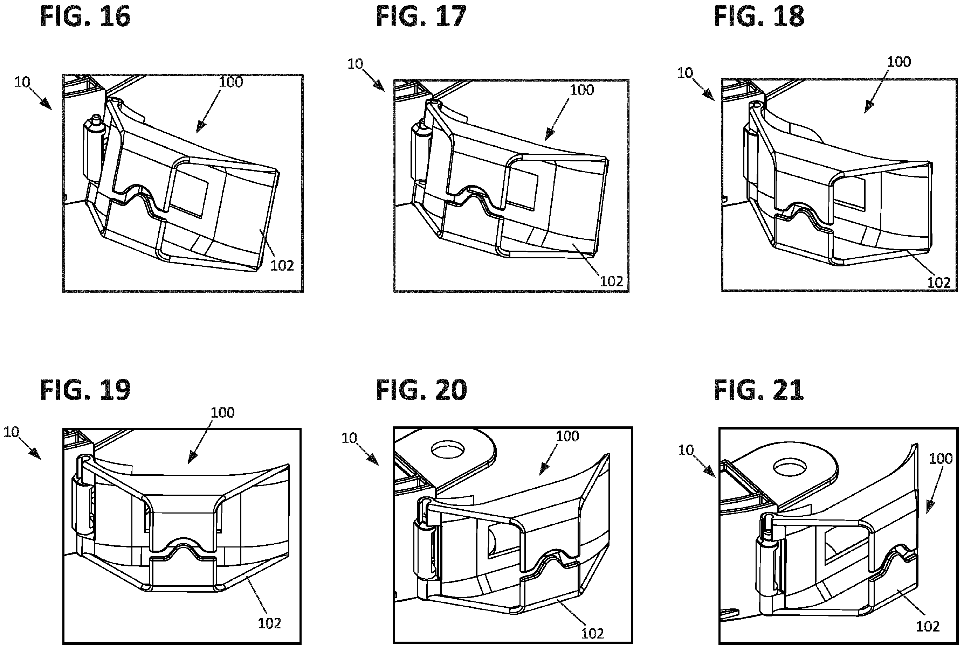

As most easily seen at Figures 7 to 12, the cable manager part 100 is formed as a singular component with a main body 102 defining a top wall 102a and a bottom wall 102b that extend from a back wall 102c. In one aspect, the back wall has an aperture 102h. A downwardly depending front wall 102d is shown as extending from the top wall 102a and an upwardly depending front wall 102e is shown as extending from the bottom wall 102b such that a channel 102f is formed for allowing cables to be placed within an interior space 102g defined by the walls 102a - 102e. As configured, cables or patch cords extend from the tray 12 and through the interior space 102g. The back wall 102c acts as a bend radius limiter for the patch cords which extend through the main body 102. In one aspect, the back wall 102c is curved for this purpose. As the tray 12 is being rotated between the access and folded positions about the axis X2, the cable manager part 100 can automatically rotate about the axis X1 between a first position (Figure 21) and a second position (Figure 19) to accommodate the resulting movement of the patch cords such that bunching is minimized or prevented. To further accommodate cable movement, the back wall 102c may be made longer than the front walls 102d, 102e such that the cable manager part 100 has a generally trapezoidal shape.

In one aspect, the main body 102 of the cable manager part 100 further defines a mounting structure 104 defining a pair of receiving structures 104a, 104b that are configured to receive the pins 32b of the mounting structure 32. In one aspect, the main body 102 is provided with a cutout portion 102h in the back wall 102c, thereby resulting in the receiving structures 104a, 104b being separated by an opening or recess 102h. When the cable manager part 100 is installed onto the mounting structure 32, the recess 102h accommodates the main body 32a of the mounting structure 32.

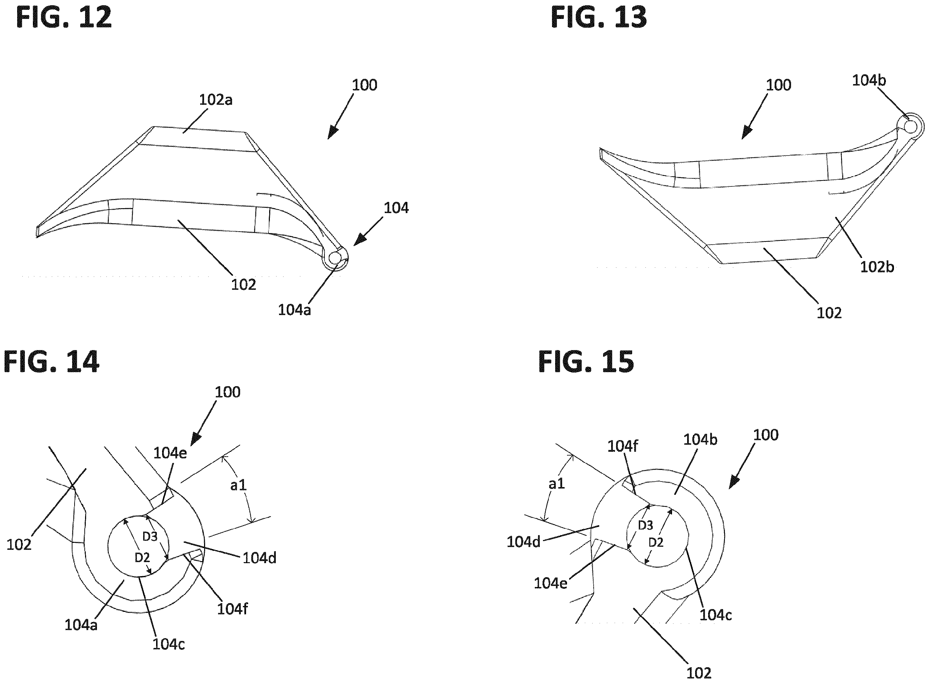

As most easily seen at Figures 14 and 15, each of the pair of receiving structures 104a, 104b defines an inner surface 104c having a concave cylindrical shape. In one aspect, the inner surface 104c has an inner diameter or dimension D2 that is generally the same or is slightly larger than the diameter or dimension D 1. Each of the pair of receiving structures 104a, 104b further defines an open channel 104d extending from an outer surface of the main body 102 into the inner surface 104c. In one aspect, the open channel 104d is defined by a pair of sidewalls 104e, 104f that converge towards each other as they extend toward the inner surface 104c. In the example shown, the sidewalls 104e, 104f converge at an acute angle a1, for example an acute angle of about 14 degrees. At their nearest point, the sidewalls 104e, 104f converge to a separation distance D3 which is less than the diameter or dimensions D1 and D2. In one aspect, each of the pair of receiving structures 104a, 104b has a length L2. In the example shown, the length L2 is less than the length L1 of the pins 32b. In examples, the length L2 is less than half the length L1. In examples, the length L2 is less than a third of the length L1. An advantage of minimizing the length L1 with respect to the length L2 is that the pins 32b are less prone to breakage by forces exerted on them by the receiving structures 104a, 104b.

With such an arrangement, a respective pin 32b is initially received by the open channel 104d and guided towards the inner surface 104c. With further movement of the pin 32b towards the inner surface 104c, the sidewalls 104e, 104f eventually engaged against the pin 32b such that additional force is required to deflect the sidewalls 104e, 104f about the pin 32b. As the pin 32b is eventually forced into the area defined by the inner surface, the sidewalls 104e, 104f return to their natural, undeflected states to secure the pin 32b within the receiving structure unless a sufficient pulling force is applied to the main body 102 in the direction of the open channel 104d. Once installed, the receiving structures 104a, 104b are coaxially aligned with the pins 32b and the axis X1. Such an arrangement or connection may be referred to as a snap-fit connection in which no additional fasteners or components are required to connect the main body 102 to the pins 32b. In some arrangements, pins are provided on the cable manager part 100 and a mounting structure with oppositely facing open channels is provided on the tray 12.

As most easily seen at Figure 7, the open channel 104c of the receiving structure 104a faces in an opposite direction relative to the open channel 104c of the receiving structure 104b. In one characterization the open channel 104c of the receiving structure 104b has a rotational orientation with respect to the axis X2 that is different from the rotational orientation of the open channel 104c of the receiving structure 104a such that a separation angle exists. In the example shown, the open channels 104c of the receiving structures 104a, 104b have a separation angle of 180 degrees.

With reference to Figures 16 to 17, the cable manager part 100 is shown as being installed onto the pins 32b of the mounting structure 32. As shown at Figure 16, the cable manager part 100 must first be oriented at an angle with respect to the pins 32b so that each of the open channels 104c can face its respective pin 32b. In this position, the axes X1 and X2 are neither parallel nor axially aligned. Once this alignment occurs, the cable manager part 100 can be rotated with respect to the axis X1 such that the pins 32b are received into the open channels 104c, as shown at Figure 17. Figure 18 shows the cable manager part 100 fully installed onto the mounting structure 32 such that the pins 32b are fully snapped into the mounting structures 104a, 104b and such that the axes X1 and X2 are parallel and coaxially aligned. Removal of the cable manager part 100 is the reverse as described and shown. Once installed, the cable manager part 100 can be rotated about the axis X1 with respect to the mounting structure 32, and therefore the tray 12, as shown in Figures 19 to 21.

In one aspect, the configuration of the cable manager part 100 is advantageous in that the cable manager part 100 cannot be removed by pulling on the cable manager part 100 in any single direction orthogonal to the axis X1, or in any direction disposed at an oblique or orthogonal angle with respect to the open channels 104c. Accordingly, forces of this kind applied on the cable manager part 100 by cables within the cable manager part 100 or by installers/operators will not inadvertently cause the cable manager part 100 to detach from the mounting structure 32. Consequently, the disclosed design results in a more secure connection while avoiding the need for additional fasteners or other components.

In another aspect, the configuration of the cable manager part 100 is advantageous in that the same part can be used with either a left-hand swinging tray 12 or a right-hand swinging tray 12. In the depicted example the tray 12, the pivot axis X2 is on the right-hand side of the tray 12. However, in some configurations, the pivot axis X2 could be on the left-hand side of the tray 12. As the open channels 104c of the cable manager part 100 are oppositely facing with the remaining portions of the cable manager part 100 being symmetrical along its length or longitudinal axis (outside of channel 102f), the cable manager part 100 can simply be flipped over to be used in a configuration where the pivot axis X2 is located on the left side of the tray. Accordingly, the disclosed design results in fewer individual components needed for multiple assembly configurations.

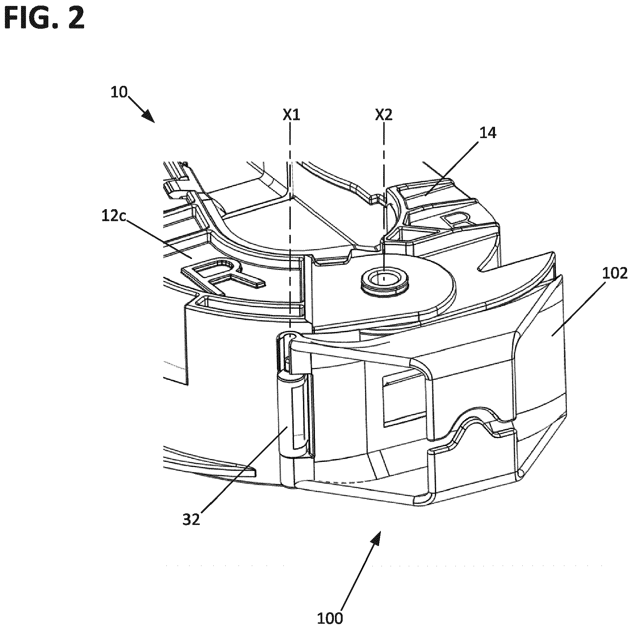

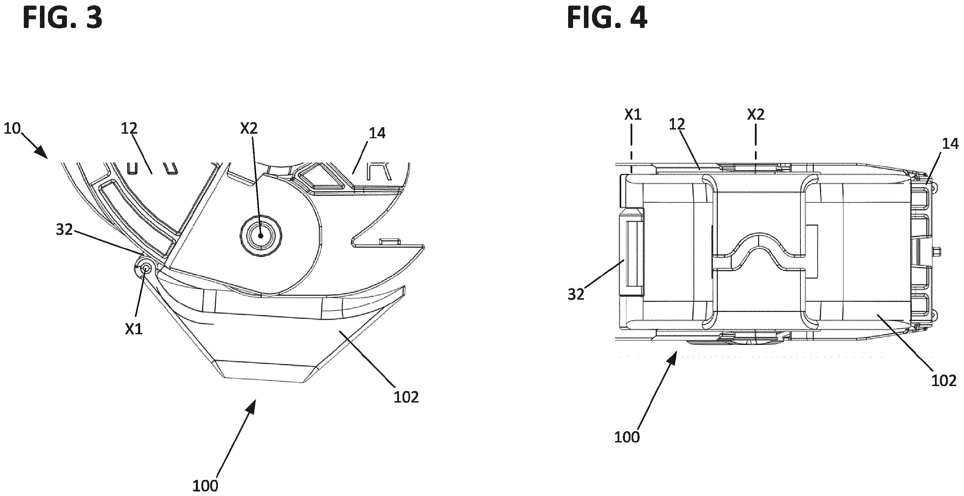

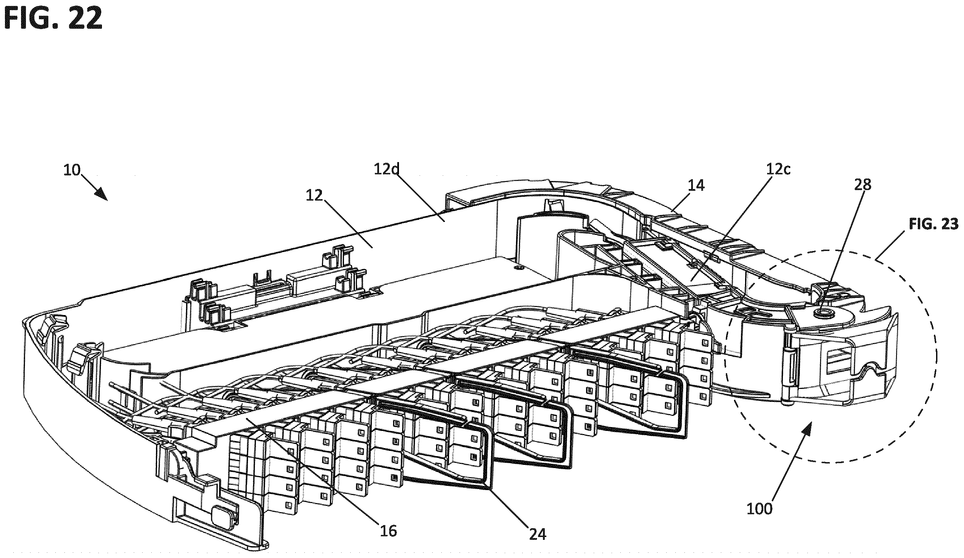

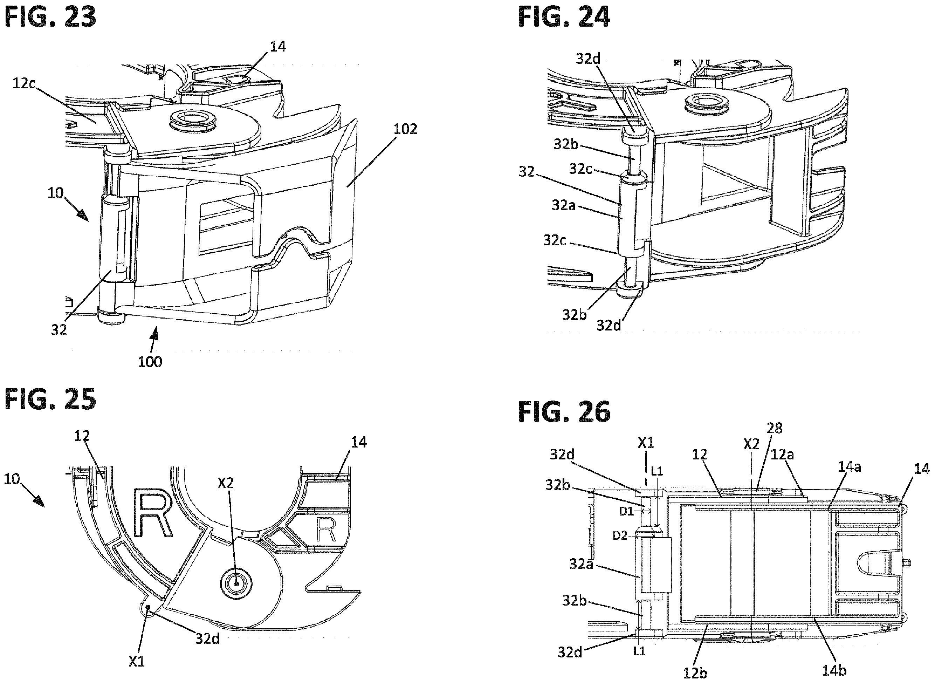

Referring to Figures 22 to 26, an alternative arrangement is presented in which the pins 32b are supported at both ends. As shown, each pin 32b is supported by the main body 32a and by an extension 32d of the tray 12. As shown, the extensions 32d extend horizontally from the intermediate structure 12c. With such a configuration, the pins 32b have a length L1 that is greater than the length L2 of the receiving structures 104a, 104b. By supporting the pins 32b at both ends, the pins 32b are less likely to bend or break due to forces exerted by the cable manager part 100. Installation, removal, and operation of the cable manager part 100 is the same in this examples as previously described and shown at Figures 1 to 21.

While this invention has been particularly shown and described with references to preferred embodiments thereof, it will be understood by those skilled in the art that various changes in form and details may be made therein without departing from the scope of the invention as defined by the appended claims. The drawings are not necessarily to scale, emphasis instead being placed upon illustrating the principles of the invention and other modifications. It is understood that the description herein is intended to be illustrative only and is not intended to be limitative.

## Claims

1. A cable manager part (100) configured for a snap-fit, rotatable connection to a telecommunications tray, the cable manager part (100) comprising:
a. a main body (102) defining an interior space through which cables from the tray can be routed;
b. a pair of receiving structures (104a, 104b) spaced apart from each other along a pivot axis (X1) about which the cable manager rotates,
**characterized in that**, the pair of receiving structures each being formed by a pair of sidewalls (104c, 104d) having oppositely facing open channels (104d) extending along a length parallel to the pivot axis for receiving a pair of pins associated with the telecommunications tray.

2. The cable manager part (100) of claim 1, wherein the pair of receiving structures (104a, 104b) are integrally formed with the main body (102).

3. The cable manager part (100) of claim 1, wherein the pair of sidewalls (104c, 104d) converge towards each other as the sidewalls (104c, 104d) extend towards an inner surface of the receiving structure.

4. The cable manager part (100) of claim 3, wherein each of the pair of sidewalls (104c, 104d) converge at an acute angle.

5. A telecommunications tray assembly for mounting within a chassis, the tray assembly comprising:
a. a tray configured to support at least one cable management structure, the tray including a mounting structure defining a pair of pins; and
b. the cable manager part (100) of claim 1, the cable manager part (100) being rotatably mounted to the pair of pins of the mounting structure, and being rotatable about a first pivot axis.

6. The telecommunications tray assembly of claim 5, wherein the tray is rotatable about a second pivot axis spaced apart from the first pivot axis.

7. The telecommunications tray assembly of claim 6, further comprising:
a. a support arm rotatably connected to the tray about the second pivot axis, the support arm supporting the tray.

8. The telecommunications tray assembly of claim 6, wherein the cable manager part is rotatable between a first position in which a portion of the second pivot axis is at least partially covered by the cable manager part and a second position in which the portion of the second pivot axis is uncovered.

9. The telecommunications tray assembly of claim 5, wherein the pair of sidewalls (104c, 104d) converge towards each other as the sidewalls (104c, 104d) extend towards an inner surface of the receiving structure.

10. The telecommunications tray assembly of claim 5, wherein each of the pair of pins extends to a free end.

11. The telecommunications tray assembly of claim 10, wherein each of the pair of pins has a first height and each of the receiving structures has a second height greater than the first height.

12. The telecommunications tray assembly of claim 5, wherein each of the pair of pins is supported at a first and second end of the pin.

13. The telecommunications tray assembly of claim 5, wherein the cable manager part (100) is connected to the tray with a snap-fit connection.

## Patentansprüche

1. Kabelmanagerteil (100), das für eine drehbare Schnappverbindung mit einer Telekommunikationsablage konfiguriert ist, wobei das Kabelmanagerteil (100) umfasst:
a. einen Hauptkörper (102), der einen Innenraum definiert, durch den Kabel von der Ablage geführt werden können;
b. ein Paar von Aufnahmestrukturen (104a, 104b), die entlang einer Drehachse (X1), um die sich der Kabelmanager dreht, voneinander beabstandet sind,
**dadurch gekennzeichnet, dass** das Paar von Aufnahmestrukturen jeweils durch ein Paar von Seitenwänden (104c, 104d) gebildet ist, die einander gegenüberliegende offene Kanäle (104d) aufweisen, die sich entlang einer Länge parallel zur Drehachse erstrecken, um ein Paar von der Telekommunikationsablage zugeordneten Stiften aufzunehmen.

2. Kabelmanagerteil (100) nach Anspruch 1, wobei das Paar von Aufnahmestrukturen (104a, 104b) mit dem Hauptkörper (102) einstückig gebildet ist.

3. Kabelmanagerteil (100) nach Anspruch 1, wobei das Paar von Seitenwänden (104c, 104d) aufeinander zu konvergiert, während sich die Seitenwände (104c, 104d) in Richtung einer Innenfläche der Aufnahmestruktur erstrecken.

4. Kabelmanagerteil (100) nach Anspruch 3, wobei jede von dem Paar von Seitenwänden (104c, 104d) in einem spitzen Winkel konvergiert.

5. Telekommunikationsablagenanordnung zum Anbringen innerhalb eines Gehäuses, wobei die Ablagenanordnung umfasst:
a. eine Ablage, die konfiguriert ist, mindestens eine Kabelverwaltungstruktur zu tragen, wobei die Ablage eine Befestigungsstruktur umfasst, die ein Paar von Stiften definiert; und
b. das Kabelmanagerteil (100) nach Anspruch 1, wobei das Kabelmanagerteil (100) an dem Paar von Stiften der Befestigungsstruktur drehbar angebracht und um eine erste Drehachse drehbar ist.

6. Telekommunikationsablagenanordnung nach Anspruch 5, wobei die Ablage um eine zweite Drehachse drehbar ist, die von der ersten Drehachse beabstandet ist.

7. Telekommunikationsablagenanordnung nach Anspruch 6, ferner umfassend:
a. einen Tragarm, der mit der Ablage um die zweite Drehachse drehbar verbunden ist, wobei der Tragarm die Ablage trägt.

8. Telekommunikationsablagenanordnung nach Anspruch 6, wobei das Kabelmanagerteil zwischen einer ersten Position, in der ein Abschnitt der zweiten Drehachse mindestens teilweise durch das Kabelmanagerteil abgedeckt ist, und einer zweiten Position, in welcher der Abschnitt der zweiten Drehachse unabgedeckt ist, drehbar ist.

9. Telekommunikationsablagenanordnung nach Anspruch 5, wobei das Paar von Seitenwänden (104c, 104d) aufeinander zu konvergiert, während sich die Seitenwände (104c, 104d) in Richtung einer Innenfläche der Aufnahmestruktur erstrecken.

10. Telekommunikationsablagenanordnung nach Anspruch 5, wobei sich jeder Stift des Paars von Stiften zu einem freien Ende erstreckt.

11. Telekommunikationsablagenanordnung nach Anspruch 10, wobei jeder Stift des Paars von Stiften eine erste Höhe aufweist und jede der Aufnahmestrukturen eine zweite Höhe aufweist, die größer ist als die erste Höhe.

12. Telekommunikationsablagenanordnung nach Anspruch 5, wobei jeder Stift des Paars von Stiften an einem ersten und zweiten Ende des Stifts getragen wird.

13. Telekommunikationsablagenanordnung nach Anspruch 5, wobei das Kabelmanagerteil (100) mit einer Schnappverbindung mit der Ablage verbunden ist.

## Revendications

1. Pièce gestionnaire de câbles (100) configurée pour une connexion rotative à encliquetage à un plateau de télécommunications, la pièce gestionnaire de câbles (100) comprenant :
a. un corps principal (102) définissant un espace intérieur à travers lequel des câbles provenant du plateau peuvent être acheminés ;
b. une paire de structures de réception (104a, 104b) espacées l'une de l'autre le long d'un axe de pivotement (X1) autour duquel le gestionnaire de câble tourne,
**caractérisée en ce que** la paire de structures de réception sont chacune formée par une paire de parois latérales (104c, 104d) ayant des canaux ouverts se faisant face de manière opposée (104d) s'étendant le long d'une longueur parallèle à l'axe de pivotement pour la réception d'une paire de broches associées au plateau de télécommunications.

2. Pièce gestionnaire de câbles (100) selon la revendication 1, dans laquelle la paire de structures de réception (104a, 104b) sont formées d'un seul tenant avec le corps principal (102) .

3. Pièce gestionnaire de câbles (100) selon la revendication 1, dans laquelle la paire de parois latérales (104c, 104d) convergent l'une vers l'autre lorsque les parois latérales (104c, 104d) s'étendent vers une surface intérieure de la structure de réception.

4. Pièce gestionnaire de câbles (100) selon la revendication 3, dans laquelle chacune de la paire de parois latérales (104c, 104d) convergent à un angle aigu.

5. Ensemble plateau de télécommunications pour le montage à l'intérieur d'un châssis, l'ensemble de plateau comprenant :
a. un plateau configuré pour supporter au moins une structure gestionnaire de câbles, le plateau comprenant une structure de montage définissant une paire de broches ; et
b. la pièce gestionnaire de câbles (100) selon la revendication 1, la pièce gestionnaire de câbles (100) étant montée de manière rotative sur la paire de broches de la structure de montage, et étant rotative autour d'un premier axe de pivotement.

6. Ensemble plateau de télécommunications selon la revendication 5, dans lequel le plateau peut tourner autour d'un deuxième axe de pivotement espacé du premier axe de pivotement.

7. Ensemble plateau de télécommunications selon la revendication 6, comprenant en outre :
a. un bras de support relié de manière rotative au plateau autour du deuxième axe de pivotement, le bras de support supportant le plateau.

8. Ensemble plateau de télécommunications selon la revendication 6, dans lequel la pièce gestionnaire de câbles peut tourner entre une première position dans laquelle une partie du deuxième axe de pivotement est au moins partiellement recouvert par la pièce gestionnaire de câbles et une deuxième position dans laquelle la partie du deuxième axe de pivotement est découverte.

9. Ensemble plateau de télécommunications selon la revendication 5, dans lequel la paire de parois latérales (104c, 104d) convergent l'une vers l'autre lorsque les parois latérales (104c, 104d) s'étendent vers une surface intérieure de la structure de réception.

10. Ensemble plateau de télécommunications selon la revendication 5, dans lequel chacune de la paire de broches s'étend jusqu'à une extrémité libre.

11. Ensemble plateau de télécommunications selon la revendication 10, dans lequel chacune de la paire de broches a une première hauteur et chacune des structures de réception a une deuxième hauteur supérieure à la première hauteur.

12. Ensemble plateau de télécommunications selon la revendication 5, dans lequel chacune de la paire de broches est supportée au niveau d'une première et d'une deuxième extrémité de la broche.

13. Ensemble plateau de télécommunications selon la revendication 5, dans lequel la pièce gestionnaire de câbles (100) est connectée au plateau avec une connexion à encliquetage.
